Europäisches Patentamt

European Patent Office

Office européen des brevets

(11) Veröffentlichungsnummer: **0 332 808**
**A2**

## (12) EUROPÄISCHE PATENTANMELDUNG

(21) Anmeldenummer: 89100747.8

(51) Int. Cl.4: **G01B 5/02**

(22) Anmeldetag: 18.01.89

(30) Priorität: 15.03.88 DE 3808551

(43) Veröffentlichungstag der Anmeldung:
20.09.89 Patentblatt 89/38

(84) Benannte Vertragsstaaten:
DE FR GB IT

(71) Anmelder: Rheinmetall GmbH
Ulmenstrasse 125 Postfach 6609
D-4000 Düsseldorf(DE)

(72) Erfinder: Knäbel, Horst
Friedenstrasse 10a
D-4005 Meerbusch 1(DE)

(54) Vorrichtung zur Kontrolle axialer Masse von Werkstücken.

(57) Die Erfindung betrifft eine Vorrichtung zur Kontrolle von Gesamt- oder Teillängen von Werkstükken, insbesondere von Wellen und dergleichen.

Erfindungsgemäß besteht eine solche Vorrichtung (10) aus einem Grundkörper, der als ein Profilstab (12) ausgebildet ist und zwei unter einem rechten Winkel (22) zueinander und zum zu kontrollierenden Werkstück (14) weisenden Spannflächen (18, 20). In jeder der Spannflächen (18, 20) ist eine T-Nut (24, 26) eingearbeitet. Auf jeder der Spannflächen (18, 20) ist jeweils eine Aufspannleiste (30, 32) vorgesehen, die durch angearbeitete Stege (29) in der jeweiligen T-Nut (24, 26) in Längsrichtung führbar und durch T-Nutensteine (28) an beliebiger Position auf der jeweiligen Spannfläche (18, 20) durch Schrauben (31) feststellbar ist. Die Aufspannleisten (30, 32) sind mit Meßvorrichtungen (34), beispielsweise Meßtastern, und/oder mit Stützelementen (36) bestückbar. Das Werkstück (14) wird in Pinolenhalterungen (46) eingespannt, die in den T-Nuten (24, 26) feststellbar sind.

FIG.1

## Vorrichtung zur Kontrolle axialer Maße von Werkstücken

Die Erfindung bezieht sich auch eine Vorrichtung zur Kontrolle axialer Maße, wie beispielsweise Gesamt- oder Teillängen von Werkstücken, insbesondere von Wellen, Achsen, Naben und dergleichen, mit den Merkmalen des Oberbegriffs des Patentanspruchs 1.

Zur Kontrolle axialer Maße an Werkstücken wie Wellen, Achsen, Naben und dergleichen sind Vorrichtungen bekannt, bei denen ein Grundkörper als Grundplatte oder Grundrahmen ausgebildet ist, auf dem die Meßeinrichtungen, häufig bestehend aus Führungselementen oder Führungsstange, Längenmeßtaster und gekröpfter Tastspitze, montiert werden.

Die erforderliche axiale Ausrichtung einer derartigen Meßvorrichtung und ihre oft beachtliche Baulänge macht es erforderlich, daß je nach Anzahl der zu kontrollierenden axialen Maße mehrere Meßvorrichtungen nebeneinander aufgebaut werden müssen.

Da die Anzahl derart zusammengefaßter und zusammengebauter Meßvorrichtungen jedoch begrenzt ist, ist je nach Abstand der einzelnen Meßvorrichtungen zu der von ihnen zu kontrollierenden Fläche des Werkstücks eine geeignete Tastspitze zu wählen, bzw. anzupassen. Besonders nachteilig ist bei derartigen Vorrichtungen die Überbrückung dieser Abstände der Meßvorrichtungen zu den zu kontrollierenden Flächen, wenn das zu messende Werkstück, wie oft bei Getriebewellen, große Durchmessersprünge aufweist, da sich üblicherweise die Aufbauposition der Meßvorrichtungen nach dem größten Durchmesser des Werkstücks richtet und daher die Tastspitzen bis zu den Ansätzen der kleinsten Durchmesser reichen müssen.

Zur Aufnahme und Halterung der zu messenden Werkstücke enthalten derartige Vorrichtungen häufig Führungsleisten, auf denen Pinolenhalter oder auch Prismen aufgebaut werden, die aber völlig unabhängig vom Aufbau der Meßvorrichtungen sind.

Der Erfindung liegt daher die Aufgabe zugrunde, eine Vorrichtung zur Kontrolle axialer Maße, wie Gesamt- oder Teillängen an Werkstücken, insbesondere an Wellen, Achsen, Nahen und dergleichen zu schaffen, die die Nachteile der vorgenannten Vorrichtungen vermeidet und eine weit größere Anzahl von Meßstellen ermöglicht, wobei sie sehr schnell auf verschiedenartige Werkstücke umrüstbar und auch geeignet sein soll, das zu kontrollierende Werkstück aufzunehmen, zu halten, zu fixieren und gegebenenfalls auch einzuspannen, und dennoch kompakt, handhabungsgerecht und preisgünstig zu sein.

Diese Aufgabe wird gelöst durch eine erfindungsgemäße Vorrichtung zur Kontrolle axialer Maße von Werkstücken mit den Merkmalen des kennzeichnenden Teils des Patentanspruchs 1.

Vorteilhafte Weiterbildungen und Ausgestaltungen der Erfindung gehen aus den Unteransprüchen hervor.

Der besondere Vorteil der erfindungsgemäßen Vorrichtung ist darin zu sehen, daß ihr Grundkörper als Profilstab mit einem trapezförmigen Querschnitt ausgebildet ist, dessen Trapezflächen in einem vorgebbaren Abstand zu einer Werkstückmittellinie des zu kontrollierenden Werkstückes zwei symmetrisch angeordnete, vorzugsweise einen rechten Winkel bildende Spannflächen aufweist, in die parallel zur Werkstückmittellinie T-Nuten eingearbeitet sind und die mit Spannleisten zur Aufnahme von Meß- und Stützvorrichtungen sowie mit Aufbauten zur Werkstückhalterung, Werkstückfixierung oder Werkstückeinspannung bestückbar sind. Durch Stege an den Aufspannleisten, bzw. an den Aufbauten zur Werkstückhalterung können diese in den T-Nuten des Profilstabes geführt, axial verschoben sowie durch Schrauben oder eingebrachte T-Nutensteine an jeder Stelle des Profilstabes, vorzugsweise an vorgebbaren Festanschlägen, festgesetzt werden, so daß die Vorrichtung auf einfache Weise für verschiedene zu kontrollierende Werkstücke verwendet werden kann.

Weiterhin bietet die erfindungsgemäße Vorrichtung die vorteilhafte Möglichkeit einer sehr großen Meßstellendichte, da eine große Anzahl von Meßvorrichtungen wahl-oder wechselweise auf die beiden rechtwinklig zueinanderstehenden Spannflächen des Profilstabes angeordnet werden können, wobei je nach Meßaufgabe und Werkstückgestaltung die Meßvorrichtungen sowohl rechts- oder linkstastend sein können.

Ebenfalls vorteilhaft ist bei der erfindungsgemäßen Vorrichtung, daß auf ihre Aufspannleisten das Werkstück stützende Stützelemente montiert werden können, so daß sich eine sehr einfache und wirkungsvolle Werkstücklagerung ergibt.

Dabei bietet der erfindungsgemäße Profilstab außerdem die Möglichkeit, in den T-Nuten geführte und über T-Nutensteine festsetzbare Pinolenhalter aufzunehmen, die ihrerseits mit Einsätzen zur Halterung, Fixierung oder Einspannung des oder der Werkstücke ausrüstbar sind. Aufgrund der symmetrischen Anordnung der Spannflächen des Profilstabes zueinander ist die vorteilhafte Möglichkeit gegeben, Pinolenhalterungen einheitlicher Bauart zu verwenden, und sie wahlweise links oder rechts vom Werkstück in den entsprechenden T-Nuten zu verwenden, wobei die Pinolenachsen im aufgespannten Zustand mit der Werkstückmittellinie fluchten.

Die Erfindung wird nachfolgend anhand eines in einer Zeichnung dargestellten Ausführungsbeispiels näher erläutert und beschrieben.

Dabei zeigen:

Figur 1: eine Schnittdarstellung durch eine erfindungsgemäße Vorrichtung entlang einer durch I - II -III - IV bezeichnete Linie in Figur 2 und

Figur 2: eine Draufsicht auf die Vorrichtung gemäß Figur 1, jedoch aufgeklappt entlang einer durch V - VI bezeichneten Linie in Figur 1.

Eine erfindungsgemäße Vorrichtung 10 zur Kontrolle axialer Maße eines Werkstücks, hier beispielsweise eine Welle 14 mit einer Werkstückmittellinie 16, weist einen beliebig langen Profilstab 12 auf, der über eine erste Spannfläche 18 und eine zweite Spannfläche 20, die sich bei dem dargestellten Ausführungsbeispiel unterhalb der Werkstückmittellinie 16 entlang dieser Mittellinie 16 erstrecken, verfügt. Die erste Spannfläche 18 und die zweite Spannfläche 20 bilden zueinander eine, vorzugsweisen rechten Winkel 22. In die erste Spannfläche 18 ist eine erste T-Nut 24 eingeschnitten, deren Längsachse 25 parallel zur Werkstückmittellinie 16 angeordnet ist; in die zweite Spannfläche 20 ist entsprechend eine zweite T-Nut 26 eingeschnitten, deren Längsachse 27 ebenfalls parallel zur Werkstückmittellinie 16 verläuft. In den T-Nuten 24, 26 befinden sich mehrere T-Nutensteine 28, mit denen eine erste Aufspannleiste 30 auf der ersten Spannfläche 18 und eine zweite Aufspannleiste 32 auf der zweiten Spannfläche 20 durch Schrauben 31 feststellbar sind, wobei die Aufspannleisten 30, 32 über daran angearbeitete oder zusätzlich angebrachte Stege 29 in den T-Nuten 24, 26 entlang den Längsachsen 25, 27 der T-Nuten 24, 26 führbar sind.

Die Aufspannleisten 30, 32 sind in Abhängigkeit von der zu vermessenden Welle 14 aber ansich beliebig mit hier nur vereinfacht dargestellten Meßvorrichtungen 34, beispielsweise mit parallel zur Werkstück-Mittellinie 16 antastenden Meßtastern sowie mit Stützelementen 36 bestückbar.

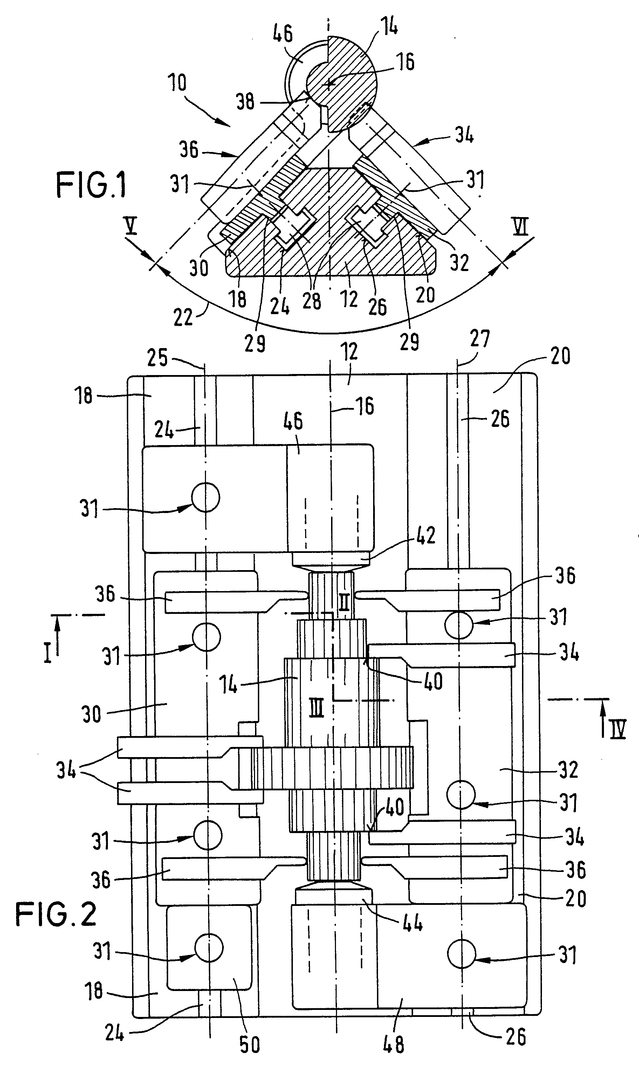

In Figur 1 ist die Bestückung der ersten Aufspannleiste 30 mit einem solchen Stützelement 36 dargestellt, das mit einer abgerundeten Auflagefläche 38 an der zu kontrollierenden Welle 14 anliegt. Ohne Einschränkung des Erfindungsgedankens ist es allerdings auch möglich, Stützelemente 36 zu verwenden, die stirnseitig mit jeweils einer oder mehreren am Umfang gerundeten drehbaren Kreisscheiben das Werkstück abstützen. Zur Verhinderung einer axialen Bewegung sind in diesem Falle Anschläge vorgesehen, die an der Waffe 14 jeweils an deren Stirnseiten anliegen und die in ähnlicher Weise wie die Aufspannleisten 30, 32 in den T-Nuten 24, 26 befestigbar sind.

In Figur 1 ist weiter zu sehen, in welcher Weise eine Aufspannleiste, hier am Beispiel der zweiten Aufspannleiste 32 dargestellt, eine Meßvorrichtung 34 auf der Aufspannleiste (hier 32) angeordnet wird. In Verbindung mit der Darstellung in Figur 2 wird deutlich, auf welche Weise mit mehreren Meßvorrichtungen 34 Absätze 40 der kontrollierten Welle 14 angetastet werden, um beispielsweise die Längserstreckung zwischen zwei solchen Absätzen 40 zu bestimmen.

Eine weitere Möglichkeit, die zu kontrollierende Welle 14 zu halten, ist, sie in einem ersten Zentrierdorn 42 und in einem zweiten Zentrierdorn 44 zu zentrieren und in Verbindung mit einer dem ersten Zentrierdorn 42 zugeordneten ersten Pinolenhalterung 46 und durch eine dem zweiten Zentrierdorn 44 zugeordneten zweiten Pinolenhalterung 48 einzuspannen und zu halten. Die Pinolenhalterungen 46, 48 bestehen vorzugsweise im wesentlichen aus den die Zentrierdorne 42, 44 aufnehmenden Hülsen mit daran angelenkten leistenartigen Platten und sind in gleicher Weise wie die Aufspannleisten 30, 32 mit Stegen 29 versehen und können in den T-Nuten 24, 26 durch die T-Nutensteine 28 mittels Schrauben 31 festgesetzt werden. Da die Pinolenhalterungen 46, 48 vorzugsweise baugleich ausgeführt werden, sind sie sowohl in der ersten T-Nut 24 als auch in der zweiten T-Nut 26 verwendbar. Im aufgespannten Zustand fluchten die Zentrierdorne 42, 44 in den Pinolenhalterungen 46, 48 mit der Werkstückmittellinie 16.

Vorzugsweise kann eine der Pinolenhalterungen, wie in Figur 2 dargestellt: die zweite Pinolenhalterung 48 als Anschlag für eine Aufspannleiste, in Figur 2: die zweite Aufspannleiste 32 dienen. Für die nicht an einer Pinolenhalterung anschlagende andere Aufspannleiste, hier: die erste Aufspannleiste 30 ist ein zusätzliches Anschlagstück 50 (Figur 2) vorgesehen, das wie in Figur 2 dargestellt in gleicher Weise wie die Aufspannleisten 30, 32 und wie die Pinolenhalterungen 46, 48 durch einen Steg 29 in der jeweils anderen T-Nut 24 oder 26 führbar und durch einen T-Nutenstein 28 feststellbar ist.

In Verbindung mit der erfindungsgemäßen Vorrichtung 10 werden vorzugsweise solche Meßvorrichtungen 34, bzw. solche Meßtaster verwendet, bei denen ein Längenmeßgerät mit integrierter Anstelleinrichtung quer zur Werkstückmittellinie 16, d. h. parallel zu der zu kontrollierenden Werkstück-Kante, hier am Beispiel der Absätze 40 veranschaulicht, angeordnet werden kann und die über geeignete Tastköpfe oder andere Umlenkvorrichtungen zur Abtastung der zu kontrollierenden Flächen verfügen.

Zur Aufrüstung, bzw. Umrüstung der Vorrichtung 10 auf ein beliebiges Werkstück 14 wird zuerst die Art der Werkstücklagerung festgelegt, die wie beim erfindungsgemäßen Ausführungsbeispiel dargestellt über Zentrierdorne 42, 44 oder zu Prismen angeordneten Stützelementen 36 erfolgen kann. Die Pinolenhalterungen 46, 48 sind in gleicher Weise geeignet fest- oder zustellbare Zentrierdorne, bzw. Zentrierspitzen oder auch Spannstücke aufzunehmen, wie dies für die oben beschriebenen Zentrierdorne 42, 44 vorgesehen ist. Soll die Werkstücklagerung über Prismen erfolgen, so werden die Aufspannleisten 30, 32 mit Stützelementen 36 an den dafür vorgesehenen Stellen bestückt. Es ist allerdings auch denkbar, bei entsprechender Ausbildung der auf das Werkstück 14 weisenden Stirnflächen der verwendeten Meßvorrichtungen 34, diese Stirnflächen als Stütze zu nutzen.

Nach Vorgabe der zu kontrollierenden Längen des Werkstücks 14 erfolgt die Anordnung der Meßvorrichtungen 34 auf den Aufspannleisten 30, 32 die danach vorzugsweise auf einer Seite zum Anschlag an einer Pinolenhalterung 48, bzw. am Anschlagstück 50 gebracht und dort festgespannt werden.

Der vorzugebende kürzeste Abstand zwischen den Spannflächen 18, 20 des Profilstabes 12 und der Werkstückmittellinie 16 wird durch das Maß zwischen den Spannflächen 18, 20 und der Tastebene der Meßvorrichtungen 34 sowie durch die Stärke der Aufspannleisten 30, 32 bestimmt.

Je nach Werkstück und Meßaufgabe ist es aber auch möglich, neben den dargestellten Meß-vorrichtungen 34 zusätzlich solche Meßvorrichtun-gen auf die Aufspannleisten 30, 32 zu montieren, die rechtwinklig auf eine parallel zur Werkstückmit-tellinie 16 verlaufende Werkstückoberfläche wirk-sam sind. Dies ist insbesondere dann sinnvoll, wenn das Werkstück, beispielsweise eine Welle, während der Messung um seine Rotationsachse bewegt wird.

In vorteilhafter Ausgestaltung der Erfindung ist vorgesehen, die Aufspannleisten 30, 32 so zu gestalten und auf ein oder mehrere Werkstückkonturen zu beziehen, so daß sie bei Umrüstung auf ein anderes Werkstück oder eine andere Werkstückart leicht ausgetauscht werden können. Dabei bleibt es dem Benutzer überlassen, ob er die Aufspannleisten mit oder ohne die demontierbaren Meßvorrichtungen austauscht.

## Bezugszeichen-Liste

10 Vorrichtung
12 Profilstab
14 Werkstück/Welle
16 Werkstückmittellinie
18 erste Spannfläche
20 zweite Spannfläche

22 Winkel zwischen (18) und (20)
24 erste T-Nut
25 Längsachse von (24)
26 zweite T-Nut
27 Längsachse von (26)
28 T-Nutensteine
29 Steg
30 erste Aufspannleiste
31 Schraube
32 zweite Aufspannleiste
34 Meßvorrichtung
36 Stützelement
38 Kante von (36)
40 Absatz von (14)
42 erster Zentrierdorn
44 zweiter Zentrierdorn
46 erste Pinolenhalterung
48 zweite Pinolenhalterung
50 Anschlagstück

## Ansprüche

1. Vorrichtung zur Kontrolle axialer Maße von Werkstücken, bestehend aus einem Grundkörper und Aufbauten zur Aufnahme von Meßvorrichtungen und zu messenden Werkstücken, **dadurch gekennzeichnet**, daß der Grundkörper der Vorrichtung (10) als ein Profilstab (12) mit einem im wesentlichen trapezförmigen Querschnitt ausgebildet ist, dessen Trapezflächen zwei unter einem Winkel (22) zueinander angeordnete Spannflächen (18, 20) bilden, wobei in jede der Spannflächen (18, 20) parallel zu einer Werkstückmittellinie (16) eine T-Nut (24, 26) eingearbeitet ist, so daß die Spannflächen (18, 20) mit Aufspannleisten (30, 32) zur Anbringung von Meßvorrichtungen (34) sowie mit Aufbauten zur Werkstückhalterung (46, 48) bestückbar sind, wobei sich die zwei von den Meßvorrichtungen (34) gebildeten Meßebenen in der Werkstück-Mittellinie (16) schneiden.

2. Vorrichtung nach Anspruch 1, **dadurch gekennzeichnet**, daß die Aufspannleisten (30, 32) und die Aufbauten zur Werkstückhalterung (46, 48) angearbeitete oder zusätzlich angebrachte Stege (29) aufweisen, so daß sie in den T-Nuten (24, 26) führbar und mittels den Stegen (29) zugeordnete T-Nutensteine (28) feststellbar sind.

3. Vorrichtung nach Anspruch 1 oder 2, **dadurch gekennzeichnet**, daß die T-Nuten (24, 26) zur Werkstückmittellinie (16) im Profilstab (12) symmetrisch angeordnet sind, so daß die Aufspannleisten (30, 32) und die Aufbauten zur Werkstückhalterung (46, 48) beliebig austauschbar auf den Spannflächen (18, 20) aufbaubar sind.

4. Vorrichtung nach einem der Ansprüche 1 bis 3, **dadurch gekennzeichnet**, daß die Aufspannleisten (30, 32) mit rechtwinklig zu den T-Nuten (24, 26), bzw. zu deren Längsachsen (25, 27) antastenden Meßvorrichtungen (34) bestückbar sind.

5. Vorrichtung nach einem der Ansprüche 1 bis 4, **dadurch gekennzeichnet**, daß die Aufspannleisten (30, 32) mit Stützelementen (36) bestückbar sind, die das zu kontrollierende Werkstück (14) durch abgerundete Auflageflächen (38) stützen.

6. Vorrichtung nach einem der Ansprüche 1 bis 5, **dadurch gekennzeichnet**, daß der Winkel (22) zwischen den beiden Spannflächen (18, 20) ein rechter ist.

FIG.1

FIG.2